(19) Europäisches Patentamt / European Patent Office / Office européen des brevets

(11) **EP 4 567 926 A1**

(12) **EUROPEAN PATENT APPLICATION**

(43) Date of publication:
**11.06.2025 Bulletin 2025/24**

(21) Application number: **24215104.1**

(22) Date of filing: **25.11.2024**

(51) International Patent Classification (IPC):
**H01M 4/36** (2006.01)        **H01M 10/0525** (2010.01)
**H01M 4/02** (2006.01)

(52) Cooperative Patent Classification (CPC):
**H01M 4/362; H01M 10/0525; H01M 2004/028**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.12.2023 CN 202311674827**

(71) Applicant: **Eve Power Co., Ltd.
Jingmen, Hubei 448000 (CN)**

(72) Inventors:
 • **LIU, Hang
   Jingmen Hubei, 448000 (CN)**

 • **WANG, Chao
   Jingmen Hubei, 448000 (CN)**
 • **HU, Qi
   Jingmen Hubei, 448000 (CN)**
 • **ZENG, Hanmin
   Jingmen Hubei, 448000 (CN)**
 • **HE, Wei
   Jingmen Hubei, 448000 (CN)**
 • **LIU, Jincheng
   Jingmen Hubei, 448000 (CN)**

(74) Representative: **Herrero & Asociados, S.L.
Edificio Aqua - Agustín de Foxá, 4-10
28036 Madrid (ES)**

(54) **COMPOSITE CELL AND BATTERY CONTAINING SAME**

(57)     A composite cell (1) and a battery containing the composite cell are provided. The composite cell includes positive electrode sheets. Each positive electrode sheet satisfies a condition that a ratio of its capacity per unit area to a capacity per unit area of any other positive electrode sheet is 0.9 to 1.1. The positive electrode sheets include first positive electrode sheets (1-4), and positive electrode active materials contained in the first positive electrode sheet include a first positive electrode active material and a second positive electrode active material. An energy density of the first positive electrode active material is greater than that of the second positive electrode active material. On each of the first positive

$$10\% \leq \frac{m1}{m0} \leq$$

electrode sheets,                50%, an average single-side surface density of the positive active coating layer is 50 to 650 g/m$^2$, and a specific surface resistance is 0.0001 to 0.1500 $\Omega$/mm$^2$·g.

FIG. 1

EP 4 567 926 A1

**Description**

## TECHNICAL FIELD

The present disclosure relates to the technology field of batteries, and in particular, to a composite cell and a battery containing the same.

## BACKGROUND

Materials of positive electrodes of mainstream lithium-ion battery mainly include oxide-based positive electrode active material systems and phosphate-based positive electrode active material systems. The oxide-based positive electrode active materials have high energy density but poor structural stability, while the phosphate-based positive electrode active materials have low energy density but long cycle life and obvious advantages of cost and safety. How to give full play to the complementary advantages of different materials has always been a difficult problem in the industry. At present, in the industry, positive electrode slurry formed by mixing different types of positive electrode active materials in a blending manner is generally coated directly on surfaces of a current collector to prepare a positive electrode sheet. However, differences in particle sizes and surface energies of different types of positive electrode active materials lead to agglomeration of the mixed slurry. The above-mentioned problems can be avoided to a certain extent by means of a multi-layer coating method. However, when the proportions of different types of positive electrode active materials differ greatly, the coating surface density of the material with a smaller proportion is too small, and the coating process cannot be realized.

Thus, how to integrate different types of positive electrode sheets in the same cell and give full play to the synergistic advantages of different types of positive electrode active materials is a technical problem to be solved urgently by one of ordinary skill in the art in research.

## SUMMARY

In a first aspect of the present disclosure, a composite cell is provided. The composite cell includes positive electrode sheets. The number of the positive electrode sheets is greater than one. Each positive electrode sheet satisfies a condition that a ratio of its capacity per unit area to a capacity per unit area of any other positive electrode sheet is 0.9 to 1.1. The positive electrode sheets include first positive electrode sheets, and positive electrode active materials contained in the first positive electrode sheet include a first positive electrode active material and a second positive electrode active material. An energy density of the first positive electrode active material is greater than that of the second positive electrode active material. On each of the first positive electrode sheets, the mass of the first positive electrode active material is less than the mass of the second positive electrode active material, and $10\% \leq \frac{m1}{m0} \leq 50\%$, wherein m1 represents the mass of the first positive electrode active material contained in the first positive electrode sheet, and m0 represents a total mass of the positive electrode active material contained in the first positive electrode sheet. On each of the first positive electrode sheets, the number of layers of positive active coating layer is greater than one, and an average single-side surface density of the positive active coating layer is 50 to 650 g/m$^2$, and a specific surface resistance of the first positive electrode sheet is 0.0001 to 0.1500 $\Omega$/mm$^2$·g. The positive electrode active coating layer includes a first positive electrode coating layer and a second positive electrode active coating layer. A positive electrode active material contained in the first positive electrode active coating layer is the first positive electrode active material, and a positive electrode active material contained in the second positive electrode active coating layer is the second positive electrode active material.

In the composite cell provided in the present disclosure, by adjusting the proportion of the positive electrode active materials in the first positive electrode sheet, as well as the surface density and specific surface resistance of the first positive electrode sheet, it is beneficial to make the potential distribution of the first positive electrode sheet uniform, and alleviate lithium deposition phenomenon caused by excessive local current density of the electrode sheet, and at the same time, it is beneficial to improve the energy density of the electrode sheet. Furthermore, in the composite cell, a capacity balance state between different positive electrode sheets is basically achieved, so that current density uniformity of the composite cell is further ensured, and an impedance level of the electrode sheets is reduced. Based on this, the first positive electrode sheet provided by the present disclosure has a stable structure, which can fully utilize the advantages of different positive electrode active materials, so as to effectively alleviate problems such as impedance and current imbalance occurring among different types of positive electrode active materials in the composite cell, thereby enabling the composite cell to have excellent energy density, high-low-temperature performance and cycle performance.

In a second aspect of the present disclosure, a battery including the above composite cell is provided.

## BRIEF DESCRIPTION OF THE DRAWINGS

FIG. 1 is a structural schematic diagram of a composite cell in embodiments 1 to 14 and comparative examples 2 to 4.
FIG. 2 is a structural schematic diagram of a composite cell in a comparative example 1.
FIG. 3 is a schematic diagram of a battery according to some embodiments.

Reference numerals in the drawings: 100, battery; 10, battery housing; 1, composite cell; 1-1, second positive electrode sheet; 1-2; separator; 1-3, negative electrode sheet; 1-4, first positive electrode sheet; 1-41, first positive electrode active coating layer; 1-42, second positive electrode active coating layer; 2, composite cell; 2-1, second positive electrode sheet B; 2-2, separator; 2-3, negative electrode sheet; 2-4, second positive electrode sheet C.

## DETAILED DESCRIPTION

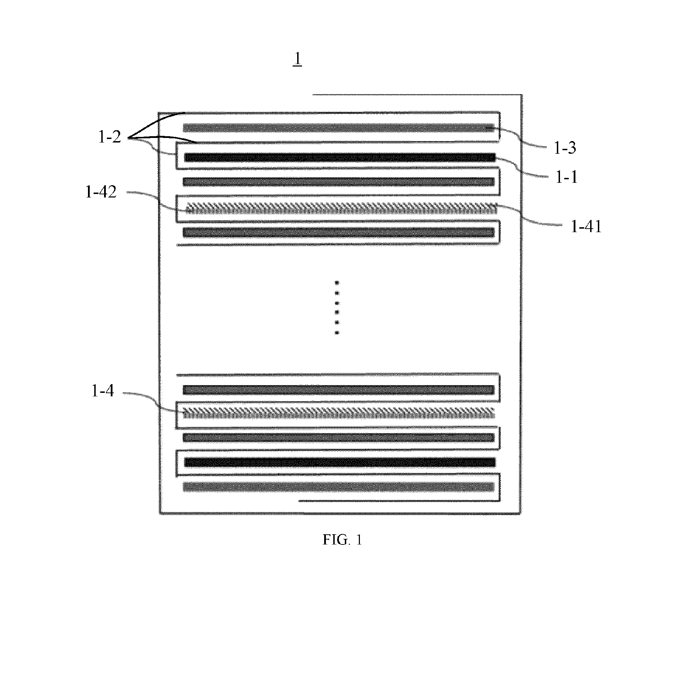

Referring to FIG. 1, embodiments of the present disclosure provide a composite cell 1. The composite cell 1 includes a plurality of positive electrode sheets, a plurality of separators 1-2, and a plurality of negative electrode sheet 1-3s 1-3. The plurality of positive electrode sheets and the plurality of negative electrode sheet 1-3s 1-3 are alternately stacked, with a separator 1-2 arranged between every two adjacent positive electrode sheet and negative electrode sheet 1-3.

In these embodiments of the present disclosure, each positive electrode sheet satisfies a condition that a ratio of its capacity per unit area to a capacity per unit area of any other positive electrode sheet is 0.9 to 1.1. The positive electrode sheets include first positive electrode sheets 1-4, and positive electrode active materials contained in the first positive electrode sheet 1-4 include a first positive electrode active material and a second positive electrode active material. An energy density of the first positive electrode active material is greater than that of the second positive electrode active material. On each of the first positive electrode sheets 1-4, the mass of the first positive electrode active material is less than the mass of the second positive electrode active material, and $10\% \leq \frac{m1}{m0} \leq 50\%$, wherein m1 represents the mass of the first positive electrode active material contained in the first positive electrode sheet 1-4, and m0 represents a total mass of the positive electrode active material contained in the first positive electrode sheet 1-4. On each of the first positive electrode sheets 1-4, the number of layers of positive active coating layer is greater than one, and an average single-side surface density of the positive active coating layer is 50 to 650 g/m$^2$, and a specific surface resistance of the first positive electrode sheet 1-4 is 0.0001 to 0.1500 $\Omega$/mm$^2 \cdot$g. The positive electrode active coating layer includes a first positive electrode active coating layer 1-41 and a second positive electrode active coating layer 1-42. A positive electrode active material contained in the first positive electrode active coating layer 1-41 is the first positive electrode active material, and a positive electrode active material contained in the second positive electrode active coating layer 1-42 is the second positive electrode active material.

In the composite cell 1 provided in the present disclosure, by adjusting the proportion of the positive electrode active materials in the first positive electrode sheet 1-4, as well as the surface density and specific surface resistance of the first positive electrode sheet 1-4, it is beneficial to make the potential distribution of the first positive electrode sheet 1-4 uniform, and alleviate lithium deposition phenomenon caused by excessive local current density of the electrode sheet, and at the same time, it is beneficial to improve the energy density of the electrode sheet. Furthermore, in the composite cell 1, a capacity balance state between different positive electrode sheets is basically achieved, so that current density uniformity of the composite cell is further ensured, and an impedance level of the electrode sheets is reduced. Based on this, the first positive electrode sheet 1-4 provided by the present disclosure has a stable structure, which can fully utilize the advantages of different positive electrode active materials, so as to effectively alleviate problems such as impedance and current imbalance occurring among different types of positive electrode active materials in the composite cell, thereby enabling the composite cell to have excellent energy density, high-low-temperature performance and cycle performance.

If the mass proportion of the first positive electrode active material is too small, the precision of the coating process is limited, which easily leads to processing problems. In addition, during charging and discharging at a high rate, the non-uniform distribution of the lithium ion concentration and the potential is obvious, which easily leads to a lithium deposition phenomenon. If the mass proportion of the first positive electrode active material is too large, it is not conducive to structural stability of the first positive electrode sheet 1-4, and the cost is high.

If the surface density and specific surface resistance of the first positive electrode sheet 1-4 are too large, the electron transfer path is long and the transfer rate is slow, resulting in a decrease in the electronic conductivity of the electrode sheet. Moreover, during the lithium insertion and extraction process, the active material with a large volume effect easily peels off from the current collector, resulting in unstable structure of the electrode sheet. If the surface density and specific surface resistance of the first positive electrode sheet 1-4 are too low, the coating precision of the electrode sheet is limited, which tends to cause the processing problems, and is not conducive to the uniformity of the lithium ion extraction process, thereby causing a decrease in the energy density of the cell.

Specifically, the average surface density of the positive electrode active coating layer provided on the positive electrode sheet is Di, the average gram capacity of the positive electrode active material contained in the positive electrode sheet is Ci, the average first effect of the positive electrode active material is Ei, the average mass proportion of the positive electrode active material is Wi, and the capacity per unit area thereof is: Qi = Di * Ci * Wi/Ei.

Specifically, the specific surface resistance of the positive electrode active coating layer equal to the surface resistance of the positive electrode active coating layer divided by the mass of the positive electrode active coating layer.

In these embodiments, the positive electrode sheets further include second positive electrode sheets 1-1, where an average single-side surface density of a positive electrode active coating layer provided on the second positive electrode sheet 1-1 is 65 to 700 g/m$^2$, and a specific face resistance of the second positive electrode sheet 1-1 is 0.0002 to 0.2000 $\Omega$/mm$^2\cdot$g. The second positive electrode sheet 1-1 with a specific surface density and specific surface resistance has an excellent mating effect with the first positive electrode sheet 1-4. The second positive electrode sheet 1-1 can play a synergistic advantage with the first positive electrode sheet 1-4 to ensure uniformity of current density among different positive electrode sheets. In this way, phenomena such as unstable electrode sheet structure, lithium deposition, and polarization caused by poor matching effect of the electrode sheets are avoided, so that the energy density, high-low-temperature performance, and cycle performance of the composite cell 1 provided in the present disclosure are improved as a whole.

In some embodiemnts, $10\% \leq \dfrac{m1}{m0} \leq 30\%$ .

In some embodiemnts, the average single-side surface density of the positive electrode active coating layer provided on the first positive electrode sheet 1-4 is 100 to 500 g/m$^2$, and the specific surface resistance of the first positive electrode sheet 1-4 is 0.0001 to 0.1200 $\Omega$/mm$^2\cdot$g

In some embodiemnts, the average single-side surface density of the positive electrode active coating layer provided on the second positive electrode sheet 1-1 is 200 to 600 g/m$^2$, and the specific surface resistance of the second positive electrode sheet 1-1 is 0.0002 to 0.1600 $\Omega$/mm$^2\cdot$g

In some embodiemnts, the composite cell satisfies a condition that: $\dfrac{M1}{M0} = 5\sim40\%$ , wherein M1 represents a total mass of the first positive electrode active material contained in the composite cell, and M0 represents a total mass of all the positive electrode active material contained in the composite cell. By reasonably setting the content of the first positive electrode active material in the composite cell, it is beneficial to improve the matching effect between different positive electrode active materials, achieve the uniformity of the current density of a composite cell as a whole, and enable positive electrode active materials with different energy densities to exert their synergistic advantages, thereby further improving the energy density and cycle performance of the battery.

In some embodiemnts, the first positive electrode active material is a ternary positive electrode material, and the second positive electrode active material includes at least one of lithium iron phosphate, lithium manganese iron phosphate, and lithium manganate.

In some embodiemnts, on a same side of a current collector of the first positive electrode sheet 1-4, in a direction away from a surface of the current collector, the positive electrode active coating layer formed by the first positive electrode active material and the positive electrode active coating layer formed by the second positive electrode active material are arranged in sequence

In some embodiemnts, the positive electrode active material contained in the second positive electrode sheet 1-1 includes one of lithium iron phosphate, lithium manganese iron phosphate, and lithium manganate.

In some embodiemnts, negative electrode active material contained in the negative electrode sheet 1-3 includes carbon negative electrode material and non-carbon negative electrode material. The carbon negative electrode material includes at least one of artificial graphite, natural graphite, hard carbon and soft carbon. The non-carbon negative electrode material includes at least one of silicon-based material, titanium-based material and tin-based material.

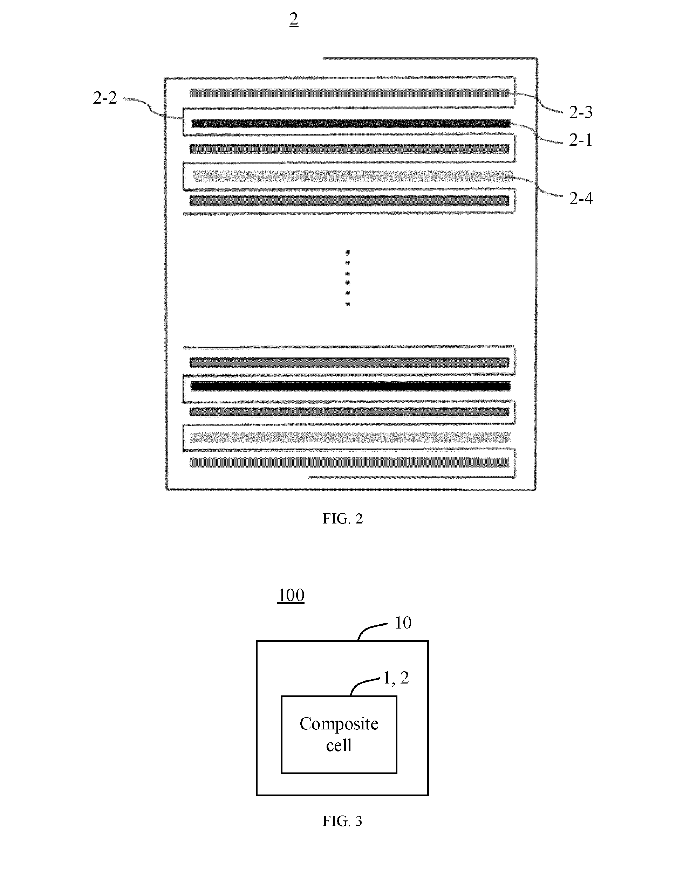

Referring to FIG. 3, embodiments of the present disclosure further provide a battery 100 containing the composite cell 1. The preparation method of the battery 100 provided by the present disclosure will be introduced bellow.

**Embodiment 1**

This embodiment 1 provides a battery 100, which is prepared as follows.

1. Preparation of a second positive electrode sheet A 1-1

Positive electrode slurry A is prepared by evenly mixing lithium iron phosphate, binder (such as Polyvinylidene Fluoride (PVDF)), and conductive agent (such as acetylene black) according to a mass ratio of 98:1:1. The positive electrode slurry A is then coated on both sides of a positive electrode current collector, and dried to form a positive electrode active coating layer A. In this way, a second positive electrode sheet A 1-1 with the positive electrode active coating layer A is prepared. An average single-side surface density $S_A$ of the positive electrode active coating layer A is 210 g/m$^2$. A specific surface resistance $R_A$ of the second positive electrode sheet A 1-1 is 0.1230 $\Omega$/mm$^2$·g.

2. Preparation of a first positive electrode sheet D1 1-4

Positive electrode slurry A is prepared by evenly mixing lithium iron phosphate, binder (such as PVDF), and conductive agent (such as acetylene black) according to a mass ratio of 98:1:1. Positive electrode slurry C is prepared by evenly mixing ternary positive electrode material, binder (such as PVDF), and conductive agent (such as acetylene black) according to a mass ratio of 90:5:5. Then, the positive electrode slurry C is coated on both sides of a positive electrode current collector, and then dried to form a first positive electrode active coating layer 1-41. Next, the positive electrode slurry A is coated on the surface of the first positive electrode active coating layer 1-41, and then dried to form a second positive electrode active coating layer 1-42. In this way, a first positive electrode sheet D1 1-4 is prepared, and the first positive electrode active coating layer 1-41 and the second positive electrode active coating layer 1-42 together constitute a composite positive electrode active coating layer provided on the first positive electrode sheet D1 1-4. In the first positive electrode sheet D1 1-4, an average single-side surface density $S_{D1}$ of the composite positive electrode active coating layer is 165 g/m$^2$. A specific surface resistance $R_{D1}$ of the first positive electrode sheet D1 1-4 is 0.0500 $\Omega$/mm$^2$·g, and

$$\frac{m1}{m0} = 10\%$$

, where m1 represents the mass of the first positive electrode active material (the ternary positive electrode material) contained in the first positive electrode sheet D1 1-4, and m0 represents a total mass of the positive electrode active material contained in the first positive electrode sheet D1 1-4.

3. Preparation of a composite cell 1

A structural schematic diagram of a composite cell 1 is shown in FIG. 1. The composite cell 1 is formed by stacking a separator 1-2, a negative electrode sheet 1-3, a separator 1-2, the second positive electrode sheet A 1-1, a separator 1-2, a negative electrode sheet 1-3, a separator 1-2, the first positive electrode sheet D1 1-4, a separator 1-2, and a negative electrode sheet 1-3 in sequence (the number of the second positive electrode sheets A 1-1 is 6, and the number of the first positive electrode sheets D1 1-4 is 44). The composite cell 1 satisfies: $\frac{M1}{M0} = 10\%$, where M1 represents the mass of the first positive electrode active material (the ternary positive electrode material) contained in the composite cell 1, M0 represents a total mass of all the positive electrode active material contained in the composite cell 1. In addition, the composite cell 1 satisfies: $\frac{Q_{D1}}{Q_A} = 1.05$, where $Q_{D1}$ represents a capacity per unit area of the first positive electrode sheet D1 1-4, and $Q_A$ represents a capacity per unit area of the second positive electrode sheet A 1-1.

4. Preparation of a battery 100

As shown in FIG. 3, the composite cell 1 is placed in a battery housing 10, and then processing such as welding of electrode tabs and baking is performed on the battery housing 10. After the moisture content is tested to be qualified, an appropriate amount of electrolyte is injected into the battery housing 10, and then the battery housing 10 is encapsulated by aging, formation, and air-extracting, to prepare a battery 100.

A structural schematic diagram of the composite cell 1 prepared in this embodiment is shown in FIG. 1.

**Embodiment 2**

This embodiment 2 provides a battery 100, which is prepared as follows.

1. Preparation of a second positive electrode sheet B 1-1

Positive electrode slurry B is prepared by evenly mixing lithium manganese iron phosphate, binder (such as PVDF), and conductive agent (such as acetylene black) according to a mass ratio of 98:1:1. The positive electrode slurry B is then coated on both sides of a positive electrode current collector, and dried to form a positive electrode active coating layer B. In this way, a second positive electrode sheet B 1-1 with the positive electrode active coating layer B is prepared. An average single-side surface density $S_B$ of the positive electrode active coating layer B is 175 g/m$^2$. A specific surface resistance $R_B$ of the second positive electrode sheet B 1-1 is 0.1230 $\Omega$/mm$^2$·g.

2. Preparation of a first positive electrode sheet D2 1-4

Positive electrode slurry B is prepared by evenly mixing lithium manganese iron phosphate, binder (such as PVDF), and conductive agent (such as acetylene black) according to a mass ratio of 98:1:1. Positive electrode slurry C is prepared by evenly mixing ternary positive electrode material, binder (such as PVDF), and conductive agent (such as acetylene black) according to a mass ratio of 90:5:5. Then, the positive electrode slurry C is coated on both sides of a positive electrode current collector, and then dried to form a first positive electrode active coating layer 1-41. Next, the positive electrode slurry B is coated on the surface of the first positive electrode active coating layer 1-41, and then dried to form a second positive electrode active coating layer 1-42. In this way, a first positive electrode sheet D2 1-4 is prepared, and the first positive electrode active coating layer 1-41 and the second positive electrode active coating layers 1-42 together constitute a composite positive electrode active coating layer provided on the first positive electrode sheet D2 1-4. In the first positive electrode sheet D2 1-4, an average single-side surface density $S_{D2}$ of the composite positive electrode active coating layer is 160 g/m². A specific surface resistance $R_{D2}$ of the first positive electrode sheet D2 1-4 is 0.0800 $\Omega/mm^2 \cdot g$, and $\dfrac{m1}{m0} = 10\%$, where m1 represents the mass of the first positive electrode active material (the ternary positive electrode material) contained in the first positive electrode sheet D2 1-4, and m0 represents a total mass of the positive electrode active material contained in the first positive electrode sheet D2 1-4.

3. Preparation of a composite cell 1

A structural schematic diagram of a composite cell 1 is shown in FIG. 1. The composite cell 1 is formed by stacking a separator 1-2, a negative electrode sheet 1-3, a separator 1-2, the second positive electrode sheet B 1-1, a separator 1-2, a negative electrode sheet 1-3, a separator 1-2, the first positive electrode sheet D2 1-4, a separator 1-2, and a negative electrode sheet 1-3 in sequence (the number of the second positive electrode sheets B 1-1 is 6, and the number of the first positive electrode sheets D2 1-4 is 44). The composite cell 1 satisfies: $\dfrac{M1}{M0} = 10\%$, where M1 represents the mass of the first positive electrode active material (the ternary positive electrode material) contained in the composite cell 1, M0 represents a total mass of all the positive active material contained in the composite cell 1. In addition, the composite cell 1 satisfies: $\dfrac{Q_{D2}}{Q_B} = 1.05$, where $Q_{D2}$ represents a capacity per unit area of the first positive electrode sheet D2 1-4, and $Q_B$ represents a capacity per unit area of the second positive electrode sheet B 1-1.

4. Preparation of a battery 100

As shown in FIG. 3, the composite cell 1 is placed in a battery housing 10, and then processing such as welding electrode tabs and baking is performed on the battery housing 10. After the moisture content is tested to be qualified, an appropriate amount of electrolyte is injected into the battery housing 10, and then the battery housing 10 is encapsulated by aging, formation, and air-extracting, to prepare a battery 100.
A structural schematic diagram of the composite cell 1 prepared in this embodiment is shown in FIG. 1.

**Embodiment 3**

This embodiment 3 provides a battery 100, which is prepared as follows.

1. Preparation of a second positive electrode sheet A 1-1

The preparation method of the second positive electrode sheet A 1-1 please refers to the preparation of the second positive electrode sheet A 1-1 in embodiment 1.

2. Preparation of a first positive electrode sheet D2 1-4

The preparation method of the first positive electrode sheet D2 1-4 please refers to the preparation of the first positive electrode sheet D2 1-4 in embodiment 2.

3. Preparation of a composite cell 1

A structural schematic diagram of a composite cell 1 is shown in FIG. 1. The composite cell 1 is formed by stacking a separator 1-2, a negative electrode sheet 1-3, a separator 1-2, the second positive electrode sheet A 1-1, a separator 1-2, a negative electrode sheet 1-3, a separator 1-2, the first positive electrode sheet D2 1-4, a separator 1-2, and a negative electrode sheet 1-3 in sequence (the number of the second positive electrode sheets A 1-1 is 6, and the number of the first positive electrode sheets D2 1-4 is 44). The composite cell 1 satisfies: $\frac{M1}{M0} = 10\%$ , where M1 represents the mass of the first positive electrode active material (the ternary positive electrode material) contained in the composite cell 1, M0 represents a total mass of all the positive active material contained in the composite cell 1. In addition, the composite cell 1 satisfies: $\frac{Q_{D2}}{Q_A} = 1.05$ , where $Q_{D2}$ represents a capacity per unit area of the first positive electrode sheet D2 1-4, and $Q_A$ represents a capacity per unit area of the second positive electrode sheet A 1-1.

4. Preparation of a battery 100

As shown in FIG. 3, the composite cell 1 is placed in a battery housing 10, and then processing such as welding electrode tabs and baking is performed on the battery housing 10. After the moisture content is tested to be qualified, an appropriate amount of electrolyte is injected into the battery housing 10, and then the battery housing 10 is encapsulated by aging, formation, and air-extracting, to prepare a battery 100.
A structural schematic diagram of the composite cell 1 prepared in this embodiment is shown in FIG. 1.

**Embodiment 4**

This embodiment 4 provides a battery 100, which is prepared as follows.

1. Preparation of a second positive electrode sheet A 1-1

The preparation method of the second positive electrode sheet A 1-1 please refers to the preparation of the second positive electrode sheet A 1-1 in embodiment 1.

2. Preparation of a first positive electrode sheet D3 1-4

Positive electrode slurry C is prepared by evenly mixing ternary positive electrode material, binder (such as PVDF), and conductive agent (such as acetylene black) according to a mass ratio of 90:5:5. Positive electrode slurry D is prepared by evenly mixing lithium manganate, binder (such as PVDF), and conductive agent (such as acetylene black) according to a mass ratio of 94:3:3. Then, the positive electrode slurry C is coated on both sides of a positive electrode current collector, and then dried to form a first positive electrode active coating layer 1-41. Next, the positive electrode slurry D is coated on the surface of the first positive electrode active coating layer 1-41, and then dried to form a second positive electrode active coating layer 1-42. In this way, a first positive electrode sheet D3 1-4 is prepared, and the first positive electrode active coating layers 1-41 and the second positive electrode active coating layers 1-42 together constitute a composite positive electrode active coating layer provided on the first positive electrode sheet D3 1-4. In the first positive electrode sheet D3 1-4, an average single-side surface density $S_{D3}$ of the composite positive electrode active coating layer is 175 g/m². A specific surface resistance $R_{D3}$ of the first positive electrode sheet D3 1-4 is 0.1000 Ω/mm²·g, and $\frac{m1}{m0} = $ 10%, wherein m1 represents the mass of the first positive electrode active material (the ternary positive electrode material) contained in the first positive electrode sheet D3 1-4, and m0 represents a total mass of the positive electrode active material contained in the first positive electrode sheet D3 1-4.

3. Preparation of composite cell 1

A structural schematic diagram of a composite cell 1 is shown in FIG. 1. The composite cell 1 is formed by stacking a separator 1-2, a negative electrode sheet 1-3, a separator 1-2, the second positive electrode sheet A 1-1, a separator 1-2, a negative electrode sheet 1-3, a separator 1-2, the first positive electrode sheet D3 1-4, a separator 1-2, and a negative electrode sheet 1-3 in sequence (the number of the second positive electrode sheets A 1-1 is 6, and the number of the first positive electrode sheets D3 1-4 is 44). The composite cell 1 satisfies: $\frac{M1}{M0} = 10\%$ , where M1 represents the mass of the first positive electrode active material (the ternary positive electrode material) contained in the composite cell 1, M0 represents a total mass of all the positive active material contained in the composite cell 1. In addition, the composite cell 1

$$\frac{Q_{D3}}{Q_A} = 1.05$$

satisfies: , where $Q_{D3}$ represents a capacity per unit area of the first positive electrode sheet D3 1-4, and $Q_A$ represents a capacity per unit area of the second positive electrode sheet A 1-1.

4. Preparation of a battery 100

As shown in FIG. 3, the composite cell 1 is placed in a battery housing 10, and then processing such as welding electrode tabs and baking is performed on the battery housing 10. After the moisture content is tested to be qualified, an appropriate amount of electrolyte is injected into the battery housing 10, and then the battery housing 10 is encapsulated by aging, formation, and air-extracting, to prepare a battery 100.

A structural schematic diagram of the composite cell 1 prepared in this embodiment is shown in FIG. 1.

**Embodiment 5**

In this embodiment 5, a battery 100 is prepared with reference to embodiment 1. The difference between this embodiment 5 and embodiment 1 is that: in the first positive electrode sheets D1 1-4, $\frac{m1}{m0} = 10\%$; in the composite cell 1, $\frac{M1}{M0} = 3.5\%$. Except for these differences, the materials and process operations used in this embodiment 5 are strictly consistent with those used in embodiment 1.

A structural schematic diagram of the composite cell 1 prepared in this embodiment 5 is shown in FIG. 1.

**Embodiment 6**

In this embodiment 6, a battery 100 is prepared with reference to embodiment 1. The difference between this embodiment 6 and embodiment 1 is that: in the first positive electrode sheets D1 1-4, $\frac{m1}{m0} = 10\%$; in the composite cell 1, $\frac{M1}{M0} = 5\%$. Except for these differences, the materials and process operations used in this embodiment 6 are strictly consistent with those used in embodiment 1.

A structural schematic diagram of the composite cell 1 prepared in this embodiment 6 is shown in FIG. 1.

**Embodiment 7**

In this embodiment 7, a battery 100 is prepared with reference to embodiment 1. The difference between this embodiment 7 and embodiment 1 is that: in the first positive electrode sheets D1 1-4, $\frac{m1}{m0} = 10\%$; in the composite cell 1, $\frac{M1}{M0} = 40\%$. Except for these differences, the materials and process operations used in this embodiment 7 are strictly consistent with those used in embodiment 1.

A structural schematic diagram of the composite cell 1 prepared in this embodiment 7 is shown in FIG. 1.

**Embodiment 8**

In this embodiment 8, a battery 100 is prepared with reference to embodiment 1. The difference between this embodiment 8 and embodiment 1 is that: in the first positive electrode sheets D1 1-4, $\frac{m1}{m0} = 10\%$; in the composite cell 1, $\frac{M1}{M0} = 42\%$. Except for these differences, the materials and process operations used in this embodiment 8 are strictly consistent with those used in embodiment 1.

A structural schematic diagram of the composite cell 1 prepared in this embodiment 8 is shown in FIG. 1.

**Embodiment 9**

In this embodiment 9, a battery 100 is prepared with reference to embodiment 1. The difference between this embodiment 9 and embodiment 1 is that: in the second positive electrode sheet A 1-1, the average single-side surface density $S_A$ of the positive electrode active coating layer A is 50 g/m², and the specific surface resistance $R_A$ is 0.0001 $\Omega$/mm²·g. Except for these differences, the materials and process operations used in this embodiment 9 are strictly consistent with those used in embodiment 1.

A structural schematic diagram of the composite cell 1 prepared in this embodiment 9 is shown in FIG. 1.

**Embodiment 10**

In this embodiment 10, a battery 100 is prepared with reference to embodiment 1. The difference between this embodiment 10 and embodiment 1 is that: in the second positive electrode sheet A 1-1, the average single-side surface density $S_A$ of the positive electrode active coating layer A is 65 g/m², and the specific surface resistance $R_A$ is 0.0002 $\Omega$/mm²·g. Except for these differences, the materials and process operations used in this embodiment 10 are strictly consistent with those used in embodiment 1.

A structural schematic diagram of the composite cell 1 prepared in this embodiment 10 is shown in FIG. 1.

**Embodiment 11**

In this embodiment 11, a battery 100 is prepared with reference to embodiment 1. The difference between this embodiment 11 and embodiment 1 is that: in the second positive electrode sheet A 1-1, the average single-side surface density $S_A$ of the positive electrode active coating layer A is 700 g/m², and the specific surface resistance $R_A$ is 0.2 $\Omega$/mm²·g. Except for these differences, the materials and process operations used in this embodiment 11 are strictly consistent with those used in embodiment 1.

A structural schematic diagram of the composite cell 1 prepared in this embodiment 11 is shown in FIG. 1.

**Embodiment 12**

In this embodiment 12, a battery 100 is prepared with reference to embodiment 1. The difference between this embodiment 12 and embodiment 1 is that: in the second positive electrode sheet A 1-1, the average single-side surface density $S_A$ of the positive electrode active coating layer A is 750 g/m², and the specific surface resistance $R_A$ is 0.25 $\Omega$/mm²·g. Except for these differences, the materials and process operations used in this embodiment 12 are strictly consistent with those used in embodiment 1.

A structural schematic diagram of the composite cell 1 prepared in this embodiment 12 is shown in FIG. 1.

**Embodiment 13**

In this embodiment 13, a battery 100 is prepared with reference to embodiment 1. The difference between this embodiment 13 and embodiment 1 is that: in the first positive electrode sheet D1 1-4, the average single-side surface density $S_{D1}$ of the composite positive electrode active coating layer is 650 g/m², and the specific surface resistance $R_{D1}$ is 0.0001 $\Omega$/mm²·g. Except for these differences, the materials and process operations used in this embodiment 13 are strictly consistent with those used in embodiment 1.

A structural schematic diagram of the composite cell 1 prepared in this embodiment 13 is shown in FIG. 1.

**Embodiment 14**

In this embodiment 14, a battery 100 is prepared with reference to embodiment 1. The difference between this embodiment 14 and embodiment 1 is that: in the first positive electrode sheet D1 1-4, the average single-side surface density $S_{D1}$ of the composite positive electrode active coating layer is 50 g/m², and the specific surface resistance $R_{D1}$ is 0.0500 $\Omega$/mm²·g. Except for these differences, the materials and process operations used in this embodiment 14 are strictly consistent with those used in embodiment 1.

A structural schematic diagram of the composite cell 1 prepared in this embodiment 14 is shown in FIG. 1.

**Comparative example 1**

This comparative example 1 provides a battery 100, which is prepared as follows.

1. Preparation of a second positive electrode sheet B 2-1

Positive electrode slurry B is prepared by evenly mixing lithium manganese iron phosphate, binder (such as PVDF), and conductive agent (such as acetylene black) according to a mass ratio of 98:1:1. The positive electrode slurry B is then coated on both sides of a positive electrode current collector, and dried to form a positive electrode active coating layer B. In this way, a second positive electrode sheet B 2-1 with the positive electrode active coating layer B is prepared. An average single-side surface density $S_B$ of the positive electrode active coating layer B is 175 g/m$^2$, and a specific surface resistance $R_B$ of the second positive electrode sheet B 2-1 is 0.1200 $\Omega$/mm$^2$·g.

2. Preparation of a second positive electrode sheet C 2-4

Positive electrode slurry C is prepared by evenly mixing ternary positive electrode material, binder (such as PVDF), and conductive agent (such as acetylene black) according to a mass ratio of 90:5:5. Then, the positive electrode slurry C is coated on both sides of a positive electrode current collector, and then dried to form a positive electrode active coating layer C. In this way, a second positive electrode sheet C 2-4 with the positive electrode active coating layer C is prepared. An average single-side surface density Sc of the positive electrode active coating layer C is 150 g/m$^2$, and a specific surface resistance $R_C$ of the second positive electrode sheet C 2-4 is 0.1250 $\Omega$/mm$^2$·g.

3. Preparation of a composite cell 2

A structural schematic diagram of a composite cell 2 is shown in FIG. 2. The composite cell 2 is formed by stacking a separator 2-2, a negative electrode sheet 2-3, a separator 2-2, the second positive electrode sheet B 2-1, a separator 2-2, a negative electrode sheet 2-3, a separator 2-2, the second positive electrode sheet C 2-4, a separator 2-2, and a negative electrode sheet 2-3 in sequence (the number of the second positive electrode sheets B 2-1 is 44, and the number of the second positive electrode sheet C 2-4 is 6). The composite cell 2 satisfies: $\frac{Q_C}{Q_B} = 1.05$ , where Qc represents a capacity per unit area of the second positive electrode sheet C 2-4, and $Q_B$ represents a capacity per unit area of the second positive electrode sheet B 2-1.

4. Preparation of a battery 100

As shown in FIG. 3, the composite cell 2 is placed in a battery housing 10, and then processing such as welding of electrode tabs and baking is performed on the battery housing 10. After the moisture content is tested to be qualified, an appropriate amount of electrolyte is injected into the battery housing 10, and then the battery housing 10 is encapsulated by aging, formation, and air-extracting, to prepare a battery 100.
A structural schematic diagram of the composite cell 2 prepared in this comparative example is shown in FIG. 2.

**Comparative example 2**

In this comparative example 2, a battery 100 is prepared with reference to embodiment 1. The difference between this comparative example 2 and embodiment 1 is that: in the first positive electrode sheets D1 1-4, $\frac{m1}{m0} = 7.5\%$ ; in the composite cell 1, $\frac{M1}{M0} = 10\%$ . Except for these differences, the materials and process operations used in this comparative example 2 are strictly consistent with those used in embodiment 1.
A structural schematic diagram of the composite cell 1 prepared in this comparative example 2 is shown in FIG. 1.

**Comparative example 3**

In this comparative example 3, a battery 100 is prepared with reference to embodiment 1. The difference between this comparative example 3 and embodiment 1 is that: in the first positive electrode sheets D1 1-4, the average single-side surface density $S_{D1}$ of the composite positive electrode active coating layer is 30 g/m$^2$, and the specific surface resistance $R_{D1}$ is 0.00007 $\Omega$/mm$^2$·g. Except for these differences, the materials and process operations used in this comparative example 3 are strictly consistent with those used in embodiment 1.
A structural schematic diagram of the composite cell 1 prepared in this comparative example 3 is shown in FIG. 1.

**Comparative example 4**

In this comparative example 4, a battery 100 is prepared with reference to embodiment 1. The difference between this comparative example 4 and embodiment 1 is that: in the first positive electrode sheets D1 1-4, the average single-side surface density $S_{D1}$ of the composite positive electrode active coating layer is 700 g/m$^2$, and the specific surface resistance $R_{D1}$ is 0.20 $\Omega$/mm$^2$·g. Except for these differences, the materials and process operations used in this comparative example 4 are strictly consistent with those used in embodiment 1.

A structural schematic diagram of the composite cell 1 prepared in this comparative example 4 is shown in FIG. 1.

**Test example**

1. Test objects

In this test example, the batteries prepared in embodiments 1 to 14 and comparative examples 1 to 4 were used as the test objects of this test example.

2. Test content

(1) Energy density

Charge the batteries under test at 0.33C with a constant current and a constant voltage to 4.25V, cut off at 0.02C, and then discharge them at 0.33C to 2.8V. Record the capacity, average voltage, and battery mass. Calculate the energy density of the batteries according to the following formula: energy density = capacity * average voltage / battery mass.

(2) Direct Current impedance

Charge the batteries under test at 0.33C with a constant current and a constant voltage to 4.25V, cut off at 0.02C, then discharge them at 0.33C for 90 minutes, and leave them aside for 10 minutes, and record the voltage V1 at the end of holding; then discharge them at 2C (current I) for 10 seconds, and record the voltage V2 at the end of discharging. Calculate the direct current impedance of the sodium-ion battery according to the following formula: direct current impedance = |V1-V2|/I.

(3) Cycle performance

Place the batteries under test in a 45°C incubator, charge them at 1C with a constant current and a constant voltage, cut off at 0.02C, then discharge them at 1C, cycle to 80% SOC, and record the number of cycles.

3. Test results

Table 1: Battery-related parameters of this test example

| Group | First positive electrode active material | Capacity ratio | Average single-side surface density (g/m$^2$) | Specific surface resistance ($\Omega$/mm$^2$·g) | m1/m0 (%) | M1/M0 (%) |
|---|---|---|---|---|---|---|
| Embodiment 1 | Ternary material | $\dfrac{Q_{D1}}{Q_A} = 1.05$ | $S_{D1}$= 165 $S_A$=210 | $R_{D1}$=0.0500 $R_A$=0.1230 | m1/m0 =10 | M1/M0 =10 |
| Embodiment2 | Ternary material | $\dfrac{Q_{D2}}{Q_B} = 1.05$ | $S_{D2}$=160 $S_B$= 175 | $R_{D2}$=0.0800 $R_B$=0.1230 | m1/m0 =10 | M1/M0 =10 |
| Embodiment3 | Ternary material | $\dfrac{Q_{D2}}{Q_A} = 1.05$ | $S_{D2}$=160 $S_A$=210 | $R_{D2}$=0.0800 $R_A$=0.1230 | m1/m0 =10 | M1/M0 =10 |
| Embodiment4 | Ternary material | $\dfrac{Q_{D3}}{Q_A} = 1.05$ | $S_{D3}$= 175 $S_A$=210 | $R_{D3}$=0.1000 $R_A$=0.1230 | m1/m0 =10 | M1/M0 =10 |

(continued)

| Group | First positive electrode active material | Capacity ratio | Average single-side surface density (g/m²) | Specific surface resistance ($\Omega$/mm²·g) | m1/m0 (%) | M1/M0 (%) |
|---|---|---|---|---|---|---|
| Embodiment5 | Ternary material | $\dfrac{Q_{D1}}{Q_A} = 1.05$ | $S_{D1}$= 165 $S_A$=210 | $R_{D1}$=0.0500 $R_A$=0.1230 | m1/m0 =10 | M1/M0 =3.5 |
| Embodiment6 | Ternary material | $\dfrac{Q_{D1}}{Q_A} = 1.05$ | $S_{D1}$= 165 $S_A$=210 | $R_{D1}$=0.0500 $R_A$=0.1230 | m1/m0 =10 | M1/M0 =5 |
| Embodiment7 | Ternary material | $\dfrac{Q_{D1}}{Q_A} = 1.05$ | $S_{D1}$= 165 $S_A$=210 | $R_{D1}$=0.0500 $R_A$=0.1230 | m1/m0 =10 | M1/M0 =40 |
| Embodiment8 | Ternary material | $\dfrac{Q_{D1}}{Q_A} = 1.05$ | $S_{D1}$= 165 $S_A$=210 | $R_{D1}$=0.0500 $R_A$=0.1230 | m1/m0 =10 | M1/M0 =42 |
| Embodiment9 | Ternary material | $\dfrac{Q_{D1}}{Q_A} = 1.05$ | $S_{D1}$= 165 $S_A$=50 | $R_{D1}$=0.0500 $R_A$=0.0001 | m1/m0 =10 | M1/M0 =10 |
| Embodiment 10 | Ternary material | $\dfrac{Q_{D1}}{Q_A} = 1.05$ | $S_{D1}$= 165 $S_A$=65 | $R_{D1}$=0.0500 $R_A$=0.0002 | m1/m0 =10 | M1/M0 =10 |
| Embodiment11 | Ternary material | $\dfrac{Q_{D1}}{Q_A} = 1.05$ | $S_{D1}$= 165 $S_A$=700 | $R_{D1}$=0.0500 $R_A$=0.2 | m1/m0 =10 | M1/M0 =10 |
| Embodiment 12 | Ternary material | $\dfrac{Q_{D1}}{Q_A} = 1.05$ | $S_{D1}$= 165 $S_A$=750 | $R_{D1}$=0.0500 $R_A$=0.25 | m1/m0 =10 | M1/M0 =10 |
| Embodiment 13 | Ternary material | $\dfrac{Q_{D1}}{Q_A} = 1.05$ | $S_{D1}$=650 $S_A$=210 | $R_{D1}$=0.0001 $R_A$=0.1230 | m1/m0 =10 | M1/M0 =10 |
| Embodiment 14 | Ternary material | $\dfrac{Q_{D1}}{Q_A} = 1.05$ | $S_{D1}$=50 $S_A$=210 | $R_{D1}$=0.0500 $R_A$=0.1230 | m1/m0 =10 | M1/M0 =10 |
| Comparative Example 1 | Ternary material | $\dfrac{Q_C}{Q_B} = 1.05$ | $S_B$= 175 $S_C$= 150 | $R_B$=0.1200 $R_C$=0.1250 | / | M1/M0 =10 |
| Comparative Example2 | Ternary material | $\dfrac{Q_{D1}}{Q_A} = 1.05$ | $S_{D1}$= 165 $S_A$=210 | $R_{D1}$=0.0500 $R_A$=0.1230 | m1/m0 =7.5 | M1/M0 =10 |
| Comparative Example3 | Ternary material | $\dfrac{Q_{D1}}{Q_A} = 1.05$ | $S_{D1}$=30 $S_A$=210 | $R_{D1}$=0.00007 $R_A$=0.1230 | m1/m0 =10 | M1/M0 =10 |
| Comparative Example4 | Ternary material | $\dfrac{Q_{D1}}{Q_A} = 1.05$ | $S_{D1}$=700 $S_A$=210 | $R_{D1}$=0.20 $R_A$=0.1230 | m1/m0 =10 | M1/M0 =10 |

Table 2: Battery performance test results of this test example

| Group | Energy density (Wh/kg) | DC impedance (mΩ) | Number of cycles (cycles) |
|---|---|---|---|
| Embodiment 1 | 250 | 2.0 | 1750 |
| Embodiment2 | 250 | 2.0 | 1800 |
| Embodiment3 | 250 | 1.9 | 1780 |
| Embodiment4 | 245 | 2.1 | 1600 |
| Embodiment5 | 245 | 2.5 | 1500 |
| Embodiment6 | 245 | 2.2 | 1700 |
| Embodiment7 | 245 | 2.1 | 1750 |
| Embodiment8 | 245 | 2.5 | 1450 |
| Embodiment9 | 245 | 2.4 | 1600 |
| Embodiment 10 | 250 | 2.1 | 1700 |
| Embodiment 11 | 250 | 2.1 | 1680 |
| Embodiment 12 | 245 | 2.3 | 1650 |
| Embodiment 13 | 250 | 2.1 | 1700 |
| Embodiment 14 | 250 | 2.1 | 1680 |
| Comparative Example 1 | 250 | 2.8 | 1300 |
| Comparative Example2 | 235 | 2.9 | 1250 |
| Comparative Example3 | 235 | 2.9 | 1260 |
| Comparative Example4 | 235 | 2.9 | 1200 |

Table 2 shows the test results of the relevant performance of the batteries prepared in embodiments 1 to 14 and comparative examples 1 to 4.

Comparing the test results of performance corresponding to embodiment 1 and comparative example 1, it can be seen from table 2 that under the same conditions of other materials and operations for preparing a battery, the battery prepared in embodiment 1 has a low impedance level and excellent energy density and cycle performance. However, the composite cell prepared in comparative example 1 is provided with only second positive electrode sheets, the cycle performance of the battery thus obtained was significantly lower than that of the battery prepared in embodiment 1. It is thus indicated that, compared to comparative example 1, the battery provided in embodiment 1 is provided with first positive electrode sheets, which have stable structures and can fully utilize the advantages of different positive electrode active materials, so as to effectively alleviate problems such as impedance and current imbalance occurring among different types of positive electrode active materials in the composite cell, thereby improving the energy density and cycle performance of the battery.

Comparing the test results of performance corresponding to embodiment 1 and comparative example 2, it can be seen from tables 1 and 2 that under the same conditions of other materials and operations for preparing a battery, the battery prepared in embodiment 1 has a low impedance level and excellent energy density and cycle performance. However, in the first positive electrode sheet prepared in comparative example 2, the mass proportion of the first positive electrode active material exceeds the range of 10% to 50%, and the cycle performance of the battery thus obtained was significantly lower than that of the battery prepared in embodiment 1. It is thus indicated that, compared to comparative example 2, the battery provided in embodiment 1, by reasonably setting the proportion of the first positive electrode active material in the first positive electrode sheet, is beneficial to make the potential distribution of the first positive electrode sheet uniform, and alleviate the lithium deposition phenomenon caused by excessive local current density of the electrode sheet, thereby improving the energy density and cycle performance of the battery.

Comparing the test results of performance corresponding to embodiment 1 and comparative examples 3 and 4, it can be seen from tables 1 and 2 that under the same conditions of other materials and operations for preparing a battery, the battery prepared in embodiment 1 has a low impedance level and excellent energy density and cycle performance. However, the composite positive electrode active coating layer provided on the first positive electrode sheet prepared in comparative example 3 has an average single-side surface density $S_{D1}$ less than 50 g/m$^2$, and the specific surface resistance $R_{D1}$ is less than 0.0001 Ω/mm$^2$·g; the composite positive electrode active coating layer provided on the first positive electrode sheet prepared in comparative example 4 has an average single-side surface density $S_{D1}$ greater than

650 g/m$^2$, and the specific surface resistance R$_{D1}$ was greater than 0.1500 $\Omega$/mm$^2$·g, and the cycle performance of the battery thus obtained was significantly lower than that of the battery prepared in embodiment 1. It is thus indicated that, compared to comparative examples 3 and 4, the battery provided in embodiment 1, by reasonably setting the surface density and the specific surface resistance of the composite positive electrode active coating layer in the first positive electrode sheet, is beneficial to make the potential distribution of the first positive electrode sheet uniform, and alleviate the lithium deposition phenomenon caused by excessive local current density of the electrode sheet, thereby improving the energy density and cycle performance of the battery.

Comparing the test results of performance corresponding to embodiment 1 and embodiments 5 to 8, it can be seen from tables 1 and 2 that under the same conditions of other materials and operations for preparing a battery, in embodiments 5 and 8, the mass proportions of the first positive electrode active material to all positive electrode active materials in the composite cell are respectively less than 5%, greater than 40%, and the cycle performance of the battery thus obtained was lower than that of the battery prepared in embodiment 1. It is thus indicated that, compared to embodiments 5 and 8, the composite cell provided in embodiments 1, 6 to 7, by reasonably setting the content of the first positive electrode active material in the composite cell, is beneficial for improving the matching effect between different positive electrode active materials, achieving the overall current density uniformity of the composite cell, allowing the positive electrode active materials with different energy density to exert their synergistic advantages, thereby improving the energy density and cycle performance of the battery.

Comparing the test results of performance corresponding to embodiment 1 and embodiments 9 to 12, it can be seen from tables 1 and 2 that under the same conditions of other materials and operations for preparing a battery, the positive electrode active coating layer provided on the second positive electrode sheet in embodiment 9 has an average single-side surface density S$_A$ less than 65 g/m$^2$, and the specific surface resistance R$_A$ was less than 0.0002 $\Omega$/mm$^2$·g; the positive electrode active coating layer provided on the second positive electrode sheet in embodiment 12 has an average single-side surface density S$_A$ greater than 700 g/m$^2$, and the specific areal resistance R$_A$ was greater than 0.2000 $\Omega$/mm$^2$·g, and the battery thus obtained had cycle performance lower than that of the battery prepared in embodiment 1. It is thus indicated that, compared to embodiments 9 and 12, the composite cell provided in embodiments 1, 10 and 11 is designed by reasonably setting the surface density and specific surface resistance of the second positive electrode sheet, so that the second positive electrode sheet with a specific surface density and specific surface resistance has an excellent matching effect with the first positive electrode sheet, and can play a synergistic advantage with the first positive electrode sheet to ensure the uniformity of the current density among different positive electrode sheets, and avoid the phenomena such as unstable electrode sheet structure, lithium deposition, polarization, caused by poor matching effect of the electrode sheets, thereby improving the energy density and cycle performance of the battery.

## Claims

1. A composite cell (1), comprising positive electrode sheets, wherein the number of the positive electrode sheets is greater than one; each positive electrode sheet satisfies a condition that a ratio of its capacity per unit area to a capacity per unit area of any other positive electrode sheet is 0.9 to 1.1;

    the positive electrode sheets comprise first positive electrode sheets (1-4), wherein positive electrode active materials contained in the first positive electrode sheet (1-4) comprise a first positive electrode active material and a second positive electrode active material, wherein an energy density of the first positive electrode active material is greater than that of the second positive electrode active material;
    wherein on each of the first positive electrode sheets (1-4), the mass of the first positive electrode active material is less than the mass of the second positive electrode active material, and $10\% \leq \frac{m1}{m0} \leq 50\%$, wherein m1 represents the mass of the first positive electrode active material contained in the first positive electrode sheet (1-4), and m0 represents a total mass of the positive electrode active material contained in the first positive electrode sheet (1-4);
    wherein on each of the first positive electrode sheets (1-4), the number of layers of positive electrode active coating layers is greater than one, an average single-side surface density of the positive electrode active coating layer is 50 to 650 g/m$^2$, and a specific surface resistance of the first positive electrode sheet (1-4) is 0.0001 to 0.1500 $\Omega$/mm$^2$·g; the positive electrode active coating layers comprise a first positive electrode active coating layer (1-41) and a second positive electrode active coating layer (1-42); wherein a positive electrode active material contained in the first positive electrode active coating layer (1-41) is the first positive electrode active material, and a positive electrode active material contained in the second positive electrode active coating layer (1-42) is the second positive electrode active material.

2. The composite cell (1) according to claim 1, wherein the positive electrode sheets further comprise second positive electrode sheets (1-1), wherein an average single-side surface density of a positive electrode active coating layer provided on the second positive electrode sheet (1-1) is 65 to 700 g/m$^2$, and a specific face resistance of the second positive electrode sheet (1-1) is 0.0002 to 0.2000 $\Omega$/mm$^2$·g.

3. The composite cell (1) according to claim 2, wherein $10\% \leq \dfrac{m1}{m0} \leq 30\%$ .

4. The composite cell (1) according to claim 3, wherein the average single-side surface density of the positive electrode active coating layer provided on the first positive electrode sheet (1-4) is 100 to 500 g/m$^2$, and the specific surface resistance of the first positive electrode sheet (1-4) is 0.0001 to 0.1200 $\Omega$/mm$^2$·g.

5. The composite cell (1) according to claim 4, wherein the average single-side surface density of the positive electrode active coating layer provided on the second positive electrode sheet (1-1) is 200 to 600 g/m$^2$, and the specific surface resistance of the second positive electrode sheet (1-1) is 0.0002 to 0.1600 $\Omega$/mm$^2$·g.

6. The composite cell (1) according to claim 1, wherein the composite cell (1) satisfies a condition that: $\dfrac{M1}{M0} = 5 \sim 40\%$ , wherein M1 represents a total mass of the first positive electrode active material contained in the composite cell (1), and M0 represents a total mass of all the positive electrode active material contained in the composite cell (1).

7. The composite cell (1) according to claim 1, wherein the first positive electrode active material is a ternary positive electrode material, and the second positive electrode active material comprises at least one of lithium iron phosphate, lithium manganese iron phosphate, and lithium manganate.

8. The composite cell (1) according to claim 7, wherein on a same side of a current collector of the first positive electrode sheet (1-4), in a direction away from a surface of the current collector, the positive electrode active coating layer formed by the first positive electrode active material and the positive electrode active coating layer formed by the second positive electrode active material are arranged in sequence.

9. The composite cell (1) according to claim 2, wherein the positive electrode active material contained in the second positive electrode sheet (1-1) comprises one of lithium iron phosphate, lithium manganese iron phosphate, and lithium manganate.

10. The composite cell (1) according to claim 2, wherein the composite cell (1) satisfies a condition that: $\dfrac{Q_{D1}}{Q_A} = 1.05$ , where Q$_{D1}$ represents a capacity per unit area of the first positive electrode sheet (1-4), and Q$_A$ represents a capacity per unit area of the second positive electrode sheet (1-1).

11. A battery (100), comprising a battery housing (10) and the composite cell (1) according to any one of claims 1 to 10, wherein the composite cell (1) is arranged in the battery housing (10).

FIG. 1

2

FIG. 2

100

FIG. 3

Europäisches
Patentamt

European
Patent Office

Office européen
des brevets

# EUROPEAN SEARCH REPORT

**Application Number**

EP 24 21 5104

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/006073 A1 (ZHONG HUAWEI [CN] ET AL) 6 January 2022 (2022-01-06) <br> * figures 1-5 * <br> * paragraph [0084] * <br> * claims 1,6 * <br> - - - - - | 1-11 | INV. <br> H01M4/36 <br> H01M10/0525 <br> H01M4/02 |

**TECHNICAL FIELDS SEARCHED (IPC)**

H01M

The present search report has been drawn up for all claims

| Place of search | Date of completion of the search | Examiner |
|---|---|---|
| Munich | 8 April 2025 | Riederer, Florian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 5104

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2025

| Patent document cited in search report | Publication date | Patent family member(s) | | Publication date |
|---|---|---|---|---|
| US 2022006073 A1 | 06-01-2022 | CN | 109461882 A | 12-03-2019 |
| | | CN | 113675366 A | 19-11-2021 |
| | | CN | 113675367 A | 19-11-2021 |
| | | US | 2020144600 A1 | 07-05-2020 |
| | | US | 2022006072 A1 | 06-01-2022 |
| | | US | 2022006073 A1 | 06-01-2022 |

EPO FORM P0459

For more details about this annex : see Official Journal of the European Patent Office, No. 12/82